# EUROPEAN PATENT SPECIFICATION

(11) **EP 4 065 404 B1**
(45) Date of publication and mention of the grant of the patent: **28.10.2026**
(21) Application number: 20848965.8
(22) Date of filing: 08.12.2020
(51) Int. Cl.: B60L 5/06, B60L 5/08, B60L 5/36, B60L 5/40

(54) **PANTOGRAPH CARRIAGE FOR COLLECTION OF ELECTRICITY FROM A FLEXIBLE CABLE**
STROMABNEHMERWAGEN ZUR ENTNAHME VON ELEKTRIZITÄT AUS EINEM FLEXIBLEN KABEL
CHARIOT À PANTOGRAPHE POUR LA COLLECTE D'ÉLECTRICITÉ À PARTIR D'UN CÂBLE FLEXIBLE

(30) Priority: 09.12.2019 PL 43215119
(43) Date of publication of application: 05.10.2022
(73) Proprietor: IRID SP. Z O.O., 01-991 Warszawa (PL)
(72) Inventor: CIUPINSKI, Jakub, 05-092 Lomianki Dolne (PL); CIUPINSKI, Grzegorz, 05-800 Pruszkow (PL); HABRYN, Andrzej, 32-340 Wolbrom (PL); CIUPINSKI, Maciej, 05-092 Lomianki Dolne (PL)
(74) Representative: JD&P Patent Attorneys Joanna Dargiewicz & Partners
(86) International application number: PCT/IB2020/061630
(87) International publication number: WO 2021/116903

(56) References cited:
- EP-A1- 3 498 519
- CH-A2- 712 610
- DE-A1- 102006 027 906
- GB-A- 398 602
- US-A- 446 833
- US-A1- 2013 192 944

## Description

The subject of the invention is a pantograph carriage intended for mobile, continuous transfer of electricity from a flexible cable to an electric receiver, for example, a gantry crane, a trolleybus or another vehicle, simultaneously ensuring small offset resistance and secure electric coupling. The carriage according to the invention guarantees safe contact power supply of mobile electric receivers moving along designated routes, for example, buses (trolleybuses), suspended and cable transport carriages, loaders in mines, automatic systems for crop handling and harvest in agriculture, self-propelled cranes, gantry cranes, transport carriages, etc., also under field conditions and in temporary use, for example, at construction sites or on agricultural fields and in orchards.

The commonly used system of contact-based, wired power supply for vehicles, such as tramways, railway engines, trolley buses, metro usually takes place using top, uninsulated power lines, from which power is drawn using pantographs, inclined pantographs or, particularly in the case of trolley buses, using pantographs with contact shoes. Metro systems commonly use the so-called third rail as their power supply. Power supply provided by rigid conductors preceded power supply using flexible power supply lines. Metal pipes with a ca. 20-25cm diameter, with a slit provided at their bottom, were one of the early forms of overhead power supply systems. The moving vehicle pulled a core moving inside the pipes, to which the vehicle was connected via a flexible cable. A two-pole power supply system provided by two parallel pipes was usually used. The pipes were attached to carrier ropes. The system was developed by Siemens and presented for the first time during the International Exposition of Electricity in Paris, in 1881. Rigid conductors were used for the first time within a national railway network in the city centre line Baltimore Belt Line of Baltimore & Ohio Railroad (USA) and was used for a short period of time following electrification in 1895. A Z-shaped metal profile was used as the traction cable, and the engines were provided with special receivers (followed by introduction of the so-called "third rail"). Power supply provided from the overhead lines had to be rather complicated initially, e.g. the system by Charles J. Van Depoele, in which electricity was collected using a trolley encompassing the line with its side rollers (American patent publication US 336453). Despite the fact that such receivers were quickly replaced by newer and more effective designs, they were the origin of one of two American names for tramways - the trolley.

Power supply from overhead lines became much more simple after the discovery of a trolley pole (Frank J. Sprague, used within the tramway line Franklin Street Railway in Richmond, 1888) and a contact pole, e.g. an inclined pole (Bügelstromabnehmer, Werner von Siemens, ca. 1890). A pole with a contact did not have to look like a lyre, it could also be rectangular (e.g. used within the Stockholm - Djursholm line, in three-phase lines - a design with additional frames, they were also used until recently in tramways in Rome). The trolley pole and the contact pole technology were related through a common idea - the contact between the pole and the driving line was to be realized thanks to the flexible design of the pole itself. As we have already mentioned, however, both technologies required different types of overhead lines. The invention of a pantograph, dating back to the early 20th century, seemingly had no significant influence on the shape of the overhead lines adapted to contact poles.

Before it was used within trolleybus lines, the two-pole power supply (two overhead lines) was used in some tramway networks, if the city did not approve power supply rails for the purpose, e.g. In Tokyo, Cincinnati, Havana (two-pole power supply systems). One of the variants included power supply without the so-called "zero" line, e.g. used in the Tábor - Bechyněrailway line in Czechia (František Křižík): with one line operating at +700 V, the other at -700 V.

US 446 833 A discloses a current collector with multiple poles for a flexible cable, which does not comprise any rollers.

G8 398 602 A discloses a pantograph carriage for collection of electricity from a flexible cable containing a conductor wire, partially moulded into a flexible screen which forms flexible lips in the uncovered part of conductor wires, wherein the carriage is provided with a load bearing element. The pantograph carriage contains a sliding driver attached to the load bearing element, which in their working position enter spaces between the flexible lips of the cable and touch the conductor wires with their sliding surfaces, wherein at least one opening element is provided in order to open the flexible lips of the cable in order to form a space, where the sliding drivers enter.

DE 10 2006 027906 A1, DE 10 2006 027906 A1 and EP 3 498 519 A1 disclose current collectors with multiple poles, which are meant for rigid cables.

CH 712 610 A2 discloses a current collector with multiple poles; this current collector does not include any rollers either and the contact with the wires is ensured by the collector shape itself (as a wedge).

Demand for new pantograph carriages intended for smooth transfer of electricity from a flexible cable to an electric receiver, which could be used in contact-type power supply systems for vehicles, such as tramways, railway engines, trolleybuses, metro vehicles, suspended and line transport carriages still exists in the field, also in field conditions and in temporary use scenarios.

Thus, the objective of this invention was to develop a design of a pantograph carriage intended for mobile, continuous transfer of electricity from a flexible cable to an electric receiver.

Thus, the objective of the invention is a pantograph carriage for collection of electricity from a flexible cable, containing at least two conductor wires, partially moulded into a flexible screen, which forms flexible lips in the uncovered part of conductor wires, wherein the carriage is provided with a load bearing element equipped with at least two load bearing rollers, with at least one roller rolling across the top surface of the flexible cable, characterised in that it contains at least two sliding drivers, which in their working position enter spaces between the flexible lips of the cable and touch the conductor wires with their sliding surfaces, wherein at least one opening element is provided in order to open the flexible lips of the cable in order to form a space, where the sliding drivers enter.

The opening element is preferably formed as a plate with a blade, with an edge parallel to the longitudinal axis of the cable, which with the blade inserted between the flexible cable lips is turned around an axis perpendicular to the plate blade edge, forming space into which the sliding drivers may enter.

The opening element is preferably a wedge, which inserted between the flexible cable lips forms a space, into which the sliding drivers may be inserted.

The opening element is preferably a rotary disc rotating around an axis perpendicular to the plane passing through longitudinal axes of conductor wires, such that blades of the rotary disc enter between the flexible cable lips, forming space for sliding drivers present on the rotary disc, on the side of the blade opposite to the rotation axis of the rotary disc, and the sliding drivers contact the conductor wires.

There are preferably at least two opening elements for the conductor wire, separated at a certain distance along the flexible cable.

Scissor arms with load bearing rollers are preferably attached to the load bearing element.

The load bearing element preferably includes a straight bar with its longitudinal axis perpendicular to the longitudinal axis of the flexible cable and parallel to a plane passing through longitudinal axes of conductor wires, wherein two symmetrically movable load bearing roller supports are moving along its longitudinal axis and are placed such that load bearing rollers are placed at the ends of the supports, such that roller surfaces touch the top surface of the flexible cable once the supports are fully moved in, and when moved out, the entire carriage may be moved downwards.

The load bearing element preferably includes a rigid frame with a U-shape in the cross-section towards the longitudinal axis of the flexible cable, wherein bars comprising axes of load bearing rollers are attached as rotary elements at the ends of the rigid frame arms, rotating around axes parallel to the longitudinal axis of the flexible cable, wherein in the vertical position of these bars with load bearing elements it is possible to move the entire carriage downwards, and after bar rotation together with the load bearing rollers towards the flexible cable, load bearing roller surfaces touch the top surface of the flexible cable.

The load bearing element preferably includes a divided and separable frame with a fixed part and a movable bar, wherein axes with load bearing rollers are provided at free ends of arms of both parts, such that once the bar is moved outwards from the frame, the entire carriage may be moved down and when pressed together, the load bearing roller surfaces touch the top surface of the flexible cable.

The load bearing roller may be preferably driven rollers or idle rollers.

The carriage is preferably suspended on four symmetric sets of driven load bearing rollers and idle load bearing rollers, with two rollers opposite one another, on both sides of the flexible cable, wherein distances between the terminal and neighbouring sets are at least twice as small as between the inner sets.

The carriage is preferably suspended on the top load bearing rollers pressed against the flexible cable by the bottom pressing rollers, wherein the bottom pressing rollers may be driven rollers or idle rollers.

The load bearing roller is preferably a toothed wheel used to transfer power from the carriage to the flexible cable using tracks tensioned between toothed wheels, wherein the tracks move symmetrically along the longitudinal axis of the flexible cable, along the surface of the flexible cable.

The drive of the pantograph carriage is preferably realized using toothed wheel meshing with the toothed strip integrated into the special, flexible cable and placed on its surface.

The pantograph carriage for collection of electricity from a flexible cable is presented in embodiments in the figures, where:
Fig. 1 presents a functional diagram of opening elements in the form of plates 1;
Fig. 2 presents a functional diagram of opening elements in the form of wedges 4 with blades;
Fig. 3 presents a functional diagram of opening elements in the form of discs 5 with blades;
Fig. 4 presents a functional diagram of scissor arms 8 of the carriage according to the invention, with load bearing rollers of the carriage 7 installed in bearings on arm ends;
Fig. 5 shows how the carriage is attached, if the carriage is provided with a straight bar 9 with its axis perpendicular to the longitudinal axis of the flexible cable 2 and parallel to the plane passing through longitudinal axes of conductor wires 3.
Fig. 6 shows how the carriage is attached, with the carriage provided with a rigid carriage frame 11, U-shaped in its cross-section perpendicular to the longitudinal axis of the flexible cable 2;
Fig. 7 shows how the carriage is attached, with the carriage provided with a divided, movable carriage frame with a fixed part - fixed carriage frame 12 and a movable bar 13;
Fig. 8 shows how the carriage is suspended on four symmetrical sets of driven rollers 7 and idle rollers 14;
Fig. 9 presents the carriage suspension system with top load bearing, driven rollers 7 and with bottom pressing rollers 15;
Fig. 10 presents the power and force transfer from the carriage to the flexible cable 2 through two tracks 17 tensioned between the toothed wheels 16;
Fig. 11 presents the carriage power transfer through the toothed wheel 16 meshing with the toothed strip 18 integrated into the flexible cable 2 and placed on its bottom surface.
Fig. 12 presents a complete pantograph carriage according to the invention.

List of references:
- 1: plate
- 2: flexible cable
- 2a: flexible lips
- 3: conductor wire
- 4: wedge
- 5: disc
- 6: sliding driver
- 7: driven roller
- 8: scissor arms
- 9: straight bar
- 10: roller support
- 11: load bearing element
- 12: fixed part of the movable frame
- 13: movable bar
- 14: idle roller
- 15: bottom pressing roller
- 16: toothed wheel
- 17: track
- 18: toothed strip.

### EXAMPLES

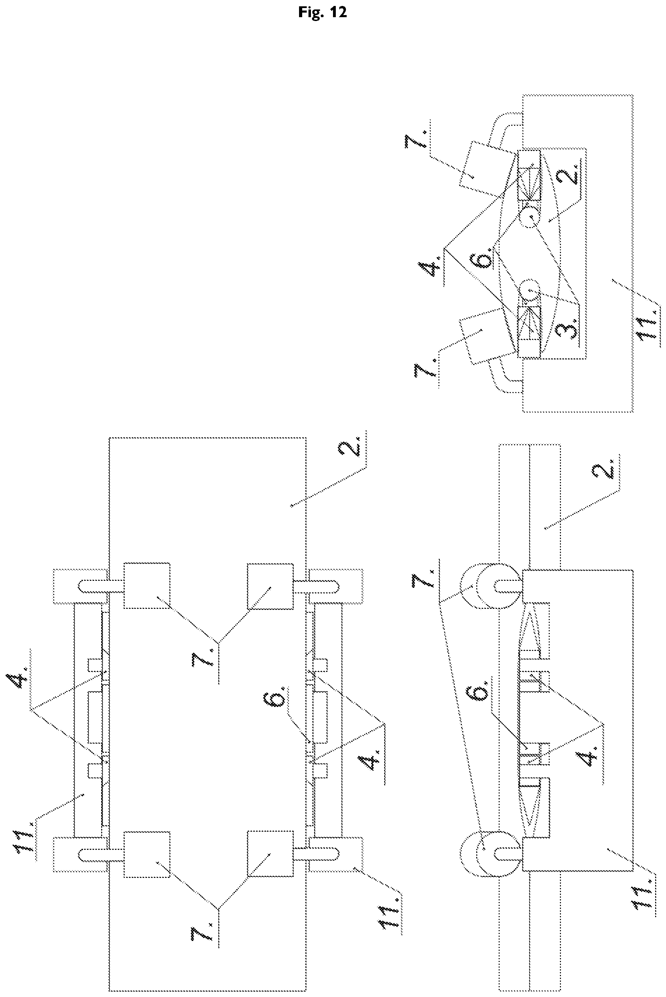

Fig. 12 presents a complete pantograph carriage according to the invention, showing the flexible cable 2, conductor wire 3, wedges 4, sliding drivers 6, driven rollers 7 and the load bearing element 11.

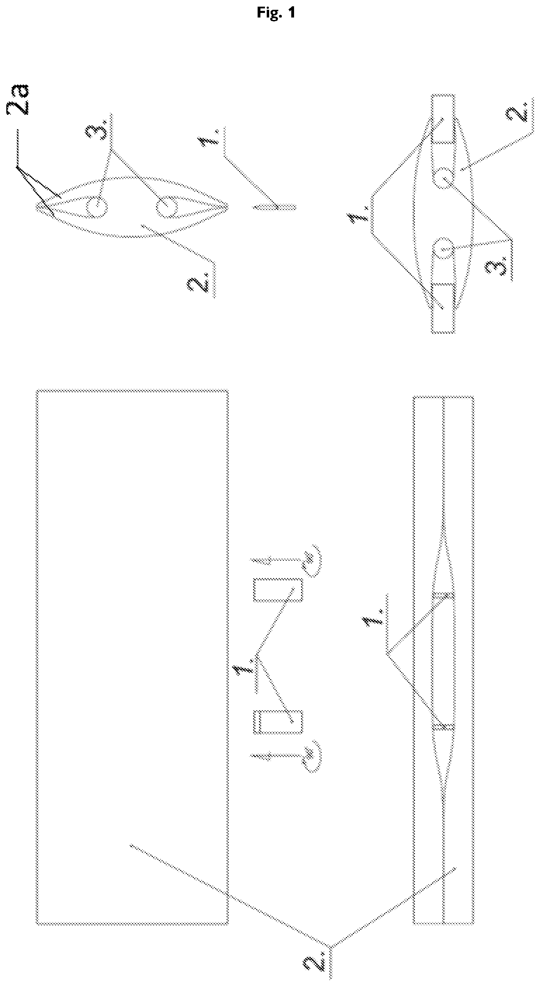

Fig. 1 presents the functional diagram of opening elements in the form of plates 1, which in their horizontal position are sliding in pairs, at a distance L, between the flexible lips 2a of the flexible cable 2 and are subsequently rotated vertically, around an axis perpendicular to the blade edge, forming a window, in which the sliding drivers may be placed.

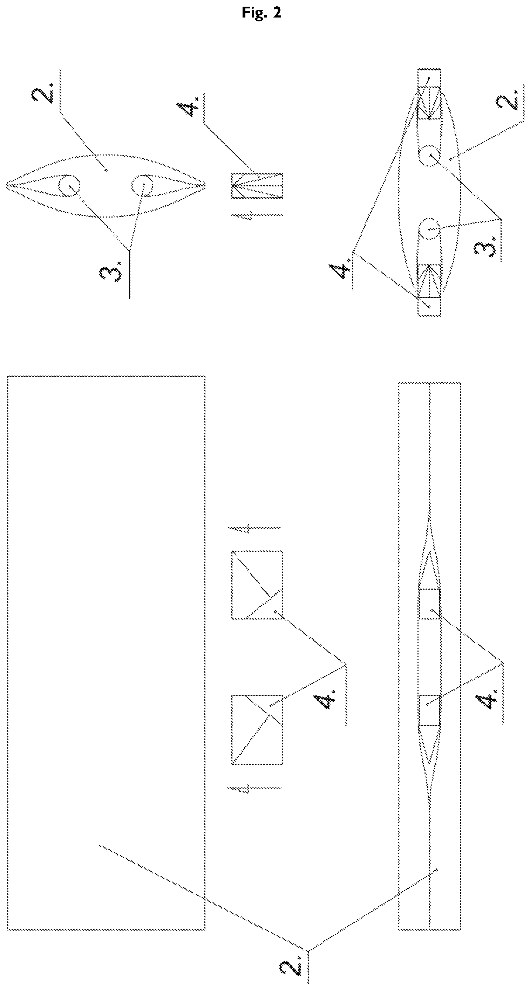

Fig. 2 presents the functional diagram of opening elements in the form of wedges 4 with blades, with said wedges 4 separated at a distance L along the flexible cable 2 and rotate around axes perpendicular to the plane passing through longitudinal axes of conductor wires 3, such that wedge blades 4 enter the space between the flexible lips 2a of the flexible cable 2, forming space for sliding drivers 6.

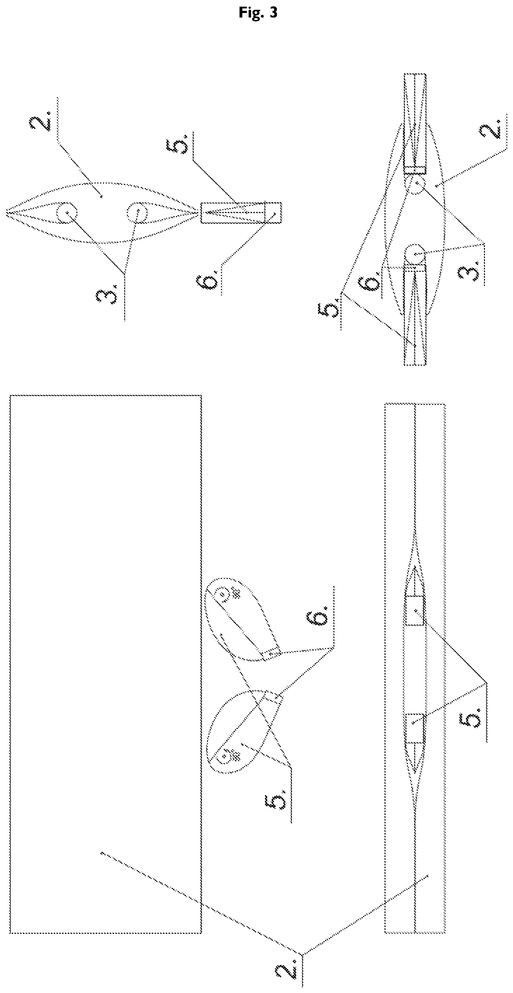

Fig. 3 presents the functional diagram of opening elements in the form of discs 5 with blades, wherein the discs 5 rotate around axes perpendicular to the plane passing through the longitudinal axes of conductor wires 3, such that blades of the discs 5 enter between the flexible lips 2a of the flexible cable 2, forming space for sliding drivers 6 present on the disc 5, on the side of the blade opposite to the rotation axis of the disc, and the sliding drivers contact 6 the conductor wires 3.

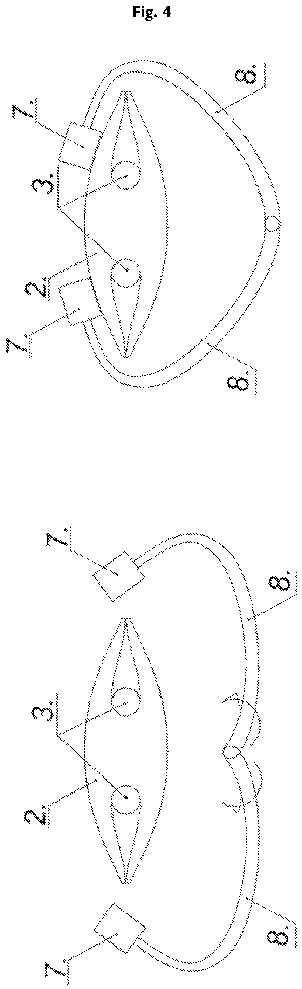

Fig. 4 presents a functional diagram of scissor arms 8 of the carriage according to the invention, with load bearing rollers 7 of the carriage installed in bearings on arm ends. In the unattached position of the carriage, the scissors arms 8 are rotatably connected to the rotation axis parallel to the longitudinal axes of the flexible cable 2 and symmetrical to conductor wires 3, while on the ends of the scissor arms 8 opposite to the rotation axis, driven rollers 7 of the carriage 7 are installed in bearings, at least transferring weight loads of the carriage onto the elastic cable 2, wherein axes of these driven rollers 7 of the carriage are located such that surfaces of driven rollers 7 touch the top surface of the flexible cable 2 after rotation of the scissor arms 8 around the rotation axis.

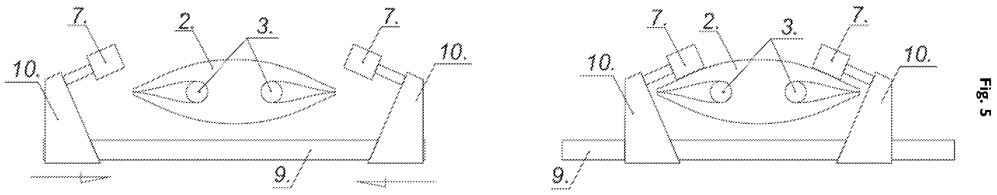

Fig. 5 presents the attachment of the carriage according to the invention, if the carriage is provided with a straight bar 9 with its axis perpendicular to the longitudinal axis of the flexible cable 2 and parallel to the plane passing through longitudinal axes of conductor wires 3, wherein two symmetrical, movable supports 10 of load bearing rollers move along its longitudinal axis, wherein driven rollers 7 are installed in bearings at the ends of supports, placed such that after the supports 10 are fully moved in, surfaces of the driven rollers 7 touch the top surface of the flexible cable 2, and after the supports are moved out, the entire system may be moved downwards.

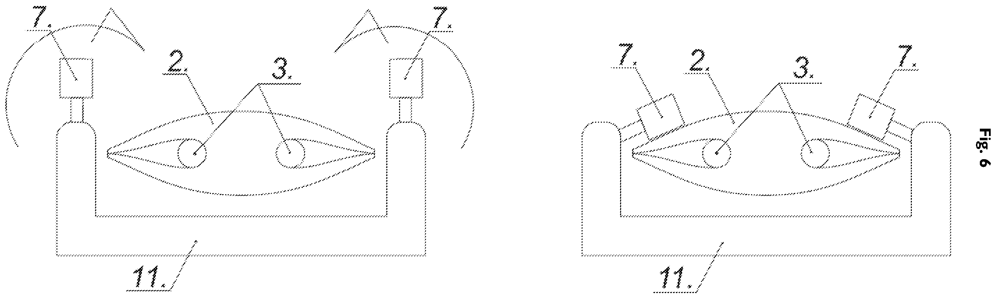

Fig. 6 presents the attachment of the carriage provided with a rigid load bearing element 11 of the carriage, with a U-shape in the cross-section towards the longitudinal axis of the flexible cable 2, wherein two bars comprising axes of the driven rollers 7 are attached as rotary elements at the ends of the arms of the load bearing element 11, wherein in the vertical position of these bars with driven rollers 7 it is possible to move the entire system downwards, and after bar rotation together with the driven rollers 7 with the rollers 7 oriented towards the flexible cable 2, the surfaces of rollers 7 touch the top surface of the flexible cable 2.

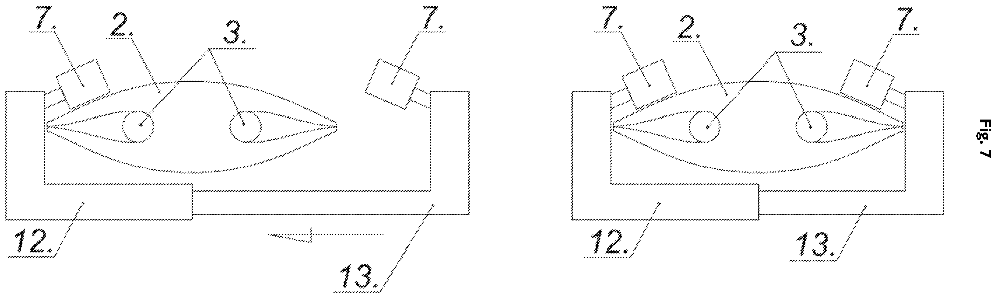

Fig. 7 presents the attachment of the carriage according to the invention, provided with a split, movable carriage frame with a fixed frame 12 - fixed carriage frame and a movable bar 13, and both these parts together have the U-shape in the cross-section perpendicular to the longitudinal axis of the flexible cable 2, wherein axes with driven rollers 7 are placed at the ends of free edges of both frames, such that once moved outside the movable bar 13 against the fixed frame 12, it is possible to move the entire system downwards, and once moved inside, the surfaces of driven rollers 7 touch the top surface of the flexible cable 2.

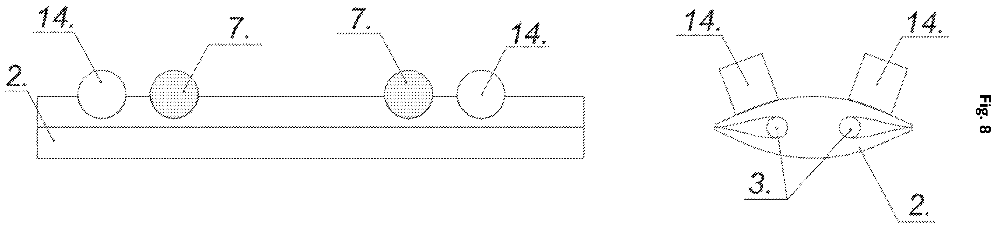

Fig. 8 presents the attachments of the carriage according to the invention, on four symmetric sets of driven rollers 7 and idle rollers 14, with two rollers opposite one another, on both sides of the flexible cable 2, wherein distances between the terminal and neighbouring sets are at least twice as small as between the inner sets.

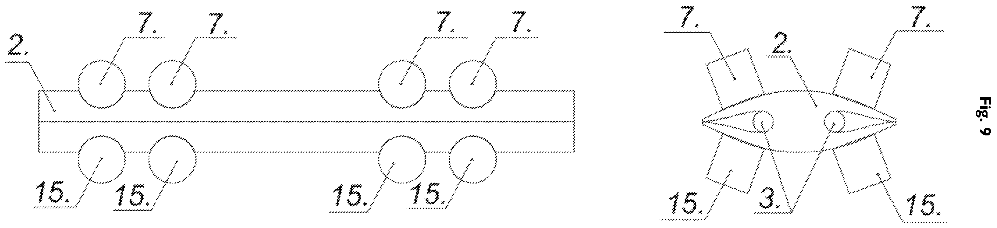

Fig. 9 presents the carriage suspension system with top load bearing, driven rollers 7 and with bottom pressing rollers 15;

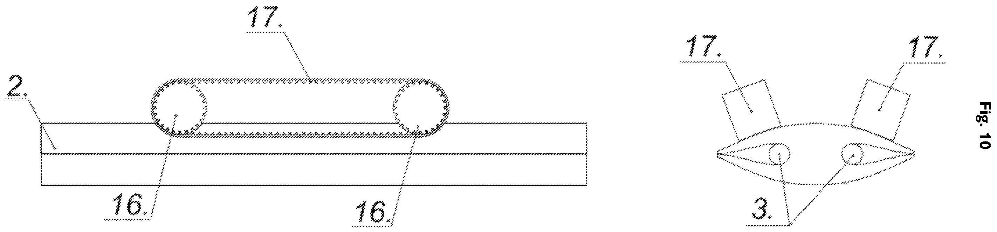

Fig. 10 presents power and force transfer from the carriage to the flexible cable 2 via two tracks 17 tensioned between the toothed wheels 16, wherein the tracks 17 move symmetrically against the longitudinal axis of the flexible cable 2, along and on the top surface of flexible cable 2.

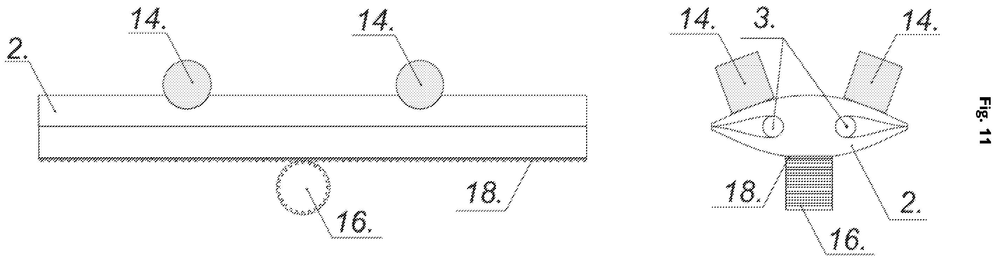

Fig. 11 presents power transfer of the carriage according to the invention, through the toothed wheel 16 meshing with the toothed strip 18 integrated into the flexible cable 2 and placed on its bottom surface.

## Claims

1. A pantograph carriage for collection of electricity from a flexible cable (2), said flexible cable (2) containing at least two conductor wires (3) partially moulded into a flexible screen forming flexible lips (2a) in the uncovered part of conductor wires, wherein the carriage is provided with a load bearing element (11), **characterised in that** the load bearing element (11) is equipped with at least two load bearing rollers (7, 14, 16), with at least one roller configured to roll across the top surface of the flexible cable (2), and the pantograph carriage contains at least two sliding drivers (6) attached to the load bearing element (8, 11), which are configured to, in their working position, enter spaces between the flexible lips (2a) of the cable (2) and touch the conductor wires (3) with their sliding surfaces, wherein at least one opening element (1, 4, 5) is provided in order to open the flexible lips (2a) of the cable (2) in order to form a space, where the sliding drivers (6) enter.

2. A carriage according to Claim 1, **characterised in that** the opening element (1, 4, 5) is a plate (1) with a blade, with an edge parallel to the longitudinal axis of the cable (2), which with the blade inserted between the flexible lips (2a) of the cable (2) is turned around an axis perpendicular to the plate (1) blade edge, forming space into which the sliding drivers (6) may enter.

3. A carriage according to Claim 1, **characterised in that** the opening element (1, 4, 5) is a wedge (4), which inserted between the flexible lips (2a) of the cable (2) forms a space, into which the sliding drivers (6) may be inserted.

4. A carriage according to Claim 1, **characterised in that** the opening element (1, 4, 5) is a rotary disc (5), which rotates around an axis perpendicular to the plane passing through longitudinal axes of conductor wires (3), such that the rotary disc (5) blades enter between the flexible lips (2a) of the cable (2), forming space for sliding drivers (6) present on the rotary disc (5), on the side of the blade opposite to the rotation axis of the rotary disc (5), and the sliding drivers (6) contact the conductor wires (3).

5. A carriage according to any of the Claims 1-4, **characterised in that** there are at least two opening elements (1, 4, 5) for the conductor wire (3), separated at a certain distance along the flexible cable (2).

6. A carriage according to any of the Claims 1-5, **characterised in that** scissor arms (8) with load bearing rollers (7, 14, 16) are attached to the load bearing element (11).

7. A carriage according to any of the Claims 1-5, **characterised in that** the load bearing element (11) includes a straight bar (9) with its longitudinal axis perpendicular to the longitudinal axis of the flexible cable (2) and parallel to a plane passing through longitudinal axes of conductor wires (3), wherein two symmetrically movable supports (10) of load bearing rollers (7, 14, 16) are moving along its longitudinal axis, wherein load bearing rollers (7, 14, 16) are placed at the ends of the supports, such that roller (7, 14, 16) surfaces touch the top surface of the flexible cable (2) once the supports are fully moved in, and when moved out, the entire carriage may be moved downwards.

8. A carriage according to any of the Claims 1-5, **characterised in that** the load bearing element (11) includes a rigid frame with a U-shape in the cross-section towards the longitudinal axis of the flexible cable (2), wherein bars comprising axes of load bearing rollers (7, 14, 16) are attached as rotary elements at the ends of the rigid frame arms, rotating around axes parallel to the longitudinal axis of the flexible cable (2), wherein in the vertical position of these bars with load bearing rollers (7, 14, 16) it is possible to move the entire carriage downwards, and after bar rotation together with the load bearing rollers (7, 14, 16) towards the flexible cable (2), load bearing roller (7, 14, 16) surfaces touch the top surface of the flexible cable (2).

9. A carriage according to any of the Claims 1-5, **characterised in that** the load bearing element (11) includes a divided and separable frame with a fixed part (12) and a movable bar (13), wherein axes with load bearing rollers (7, 14, 16) are provided at free ends of arms of both parts (12, 13), such that once the bar (13) is moved away from the frame (12), the entire carriage may be moved down and when pressed together, surfaces of the load bearing rollers (7, 14, 16) touch the top surface of the flexible cable (2).

10. A carriage according to any of the Claims 1-9, **characterised in that** the load bearing roller (7, 14, 16) may be driven rollers (7) or idle rollers (14).

11. A carriage according to any of the Claims 1-10, **characterised in that** the carriage is suspended on four symmetric sets of driven load bearing rollers (7) and idle load bearing rollers (14), with two rollers opposite one another, on both sides of the flexible cable (2), wherein distances between the terminal and neighbouring sets are at least twice as small as between the inner sets.

12. A carriage according to any of the Claims 1-11, **characterised in that** the carriage is suspended on the top load bearing rollers (7, 14, 16) pressed against the flexible cable (2) by the bottom pressing rollers (15), wherein the bottom pressing rollers (15) may be driven rollers or idle rollers.

13. A carriage according to any of the Claims 1-12, **characterised in that** the load bearing roller (7, 14, 16) is a toothed wheel (16) used to transfer power from the carriage to the flexible cable (2) using tracks (17) tensioned between toothed wheels (16), wherein the tracks (17) move symmetrically along the longitudinal axis of the flexible cable (2), along the surface of the flexible cable (2).

14. A carriage according to any of the Claims 1-13, **characterised in that** the flexible cable (2) includes a toothed strip (18) placed on a surface of the flexible cable (2) and the pantograph carriage comprises a drive including a toothed wheel (16) meshing with said toothed strip (18).

## Patentansprüche

1. Stromabnehmerwagen zur Entnahme von Elektrizität aus einem flexiblen Kabel (2), wobei das flexible Kabel (2) wenigstens zwei Leitungsdrähte (3) enthält, die teilweise in eine flexible Abschirmung gegossen sind, die zwei Lippen (2a) in dem unbedeckten Teil der Leitungsdrähte bildet, wobei der Wagen mit einem Lasttragelement (11) versehen ist, **dadurch gekennzeichnet, dass** das Lasttragelement (11) mit wenigstens zwei Lasttragrollen (7, 14, 16) ausgestattet ist, mit wenigstens einer Rollen ausgebildet zum Rollen quer über die Überseite des flexiblen Kabels (2), und der Stromabnehmerwagen wenigstens zwei Gleitantriebe (6) enthält, die an dem Lasttragelement (8, 11) angebracht sind, die ausgebildet sind, in ihrer Arbeitsposition in Räume zwischen den flexiblen Lippen (2a) des Kabels (2) einzutreten und die Leitungsdrähte (3) mit ihren Gleitfläche zu berühren, wobei wenigstens ein Öffnungselement (1, 4, 5) vorgesehen ist zum Öffnen der flexiblen Lippen (2a) des Kabels (2) zum Bilden eines Raums, wo die Gleitantriebe (6) eintreten.

2. Wagen nach Anspruch 1, **dadurch gekennzeichnet, dass** das Öffnungselement (1, 4, 5) eine Platte ist (1) mit einer Scheibe, mit einem Rand parallel zu der Längsachse des Kabels (2), die, mit der Scheibe zwischen die flexiblen Lippen (2a) des Kabels (2) eingeführt, um eine Achse senkrecht zu dem Platten (1)-Scheibenrand gedreht wird, wodurch sie einen Raum bildet, in den die Gleitantriebe (6) eintreten können.

3. Wagen nach Anspruch 1, **dadurch gekennzeichnet, dass** das Öffnungselement (1, 4, 5) ein Keil (4) ist, der, zwischen die flexiblen Lippen (2a) des Kabels (2) eingeführt, einen Raum bildet, in den die Gleitantriebe (6) eingeführt werden können.

4. Wagen nach Anspruch 1, **dadurch gekennzeichnet, dass** das Öffnungselement (1, 4, 5) eine Drehscheibe (5) ist, die sich um eine Achse senkrecht zu der Ebene, die durch die Längsachsen der Leitungsdrähte (3) hindurchläuft, dreht, so dass die Drehscheibe (5) zwischen die flexiblen Lippen (2a) des Kabels (2) eintritt, wodurch sie einen Raum für die auf der Drehscheibe vorhandenen Gleitantriebe (6) bildet, auf der Seite der Scheibe gegenüber der Drehachse der Drehscheibe (5), und die Gleitantriebe (6) die Leitungsdrähte (3) berühren.

5. Wagen nach einem der Ansprüche 1 bis 4, **dadurch gekennzeichnet, dass** es mindestens zwei Öffnungselemente (1, 4, 5) für den Leitungsdraht (3) gibt, die in einem bestimmten Abstand voneinander entlang des flexiblen Kabels (2) getrennt sind.

6. Wagen nach einem der Ansprüche 1 bis 5, **dadurch gekennzeichnet, dass** Scherenarme (8) mit Lasttragrollen (7, 14, 16) an dem Lasttragelement (11) angebracht sind.

7. Wagen nach einem der Ansprüche 1 bis 5, **dadurch gekennzeichnet, dass** das Lasttragelement (11) eine gerade Stange (9) enthält, deren Längsachse senkrecht zur Längsachse des flexiblen Kabels (2) und parallel zu einer Ebene verläuft, die durch die Längsachsen der Leitungsdrähte (3) hindurchläuft, wobei sich zwei symmetrisch bewegliche Halterungen (10) der Lasttragrollen (7, 14, 16) entlang ihrer Längsachse bewegen, wobei Lasttragrollen (7, 14, 16) an den Enden der Halterungen angeordnet sind, so dass die Rollen (7, 14, 16)-Oberflächen die Oberseite des flexiblen Kabels (2) berühren, sobald die Halterungen vollständig hineingefahren sind, und, wenn herausgefahren, der gesamte Wagen nach unten bewegt werden kann.

8. Wagen nach einem der Ansprüche 1 bis 5, **dadurch gekennzeichnet, dass** das Lasttragelement (11) einen steifen Rahmen mit einer U-Form im Querschnitt in Richtung der Längsachse des flexiblen Kabels (2) aufweist, wobei Stangen, die Achsen von Lasttragrollen (7, 14, 16) aufweisen, als Drehelemente an den Enden der steifen Rahmenarme angebracht sind, sich um Achsen parallel zu der Längsachse des flexiblen Kabels (2) drehend, wobei es in der vertikalen Position dieser Stangen mit Lasttragrollen (7, 14, 16) möglich ist, den gesamten Wagen nach unten zu bewegen, und nach einer Stangendrehung zusammen mit den Lasttragrollen (7, 14, 16) in Richtung des flexiblen Kabels (2), Lasttragrollen (7, 14, 16)-Oberflächen die Oberseite des flexiblen Kabels (2) berühren.

9. Wagen nach einem der Ansprüche 1 bis 5, **dadurch gekennzeichnet, dass** das Lasttragelement (11) einen geteilten und trennbaren Rahmen mit einem festen Teil (12) und einer beweglichen Stange (13) aufweist, wobei Achsen mit Lasttragrollen (7, 14, 16) an freien Armenden der beiden Teile (12, 13) vorgesehen sind, so dass, sobald die Stange (13) vom Rahmen (12) wegbewegt wird, der gesamte Wagen nach unten bewegt werden kann, und, wenn zusammengepresst, Oberflächen der Lasttragrollen (7, 14, 16) die Oberseite des flexiblen Kabels (2) berühren.

10. Wagen nach einem der Ansprüche 1 bis 9, **dadurch gekennzeichnet, dass** die Lasttragrollen (7, 14, 16) angetriebene Rollen (7) oder Leerlaufrollen (14) sein können.

11. Wagen nach einem der Ansprüche 1 bis 10, **dadurch gekennzeichnet, dass** der Wagen an vier symmetrischen Sätzen von angetriebene Lasttragrollen (7) und Leerlauf-Lasttragrollen (14), mit zwei Rollen einander gegenüber liegend, auf beiden Seiten des flexiblen Kabels (2) aufgehängt ist, wobei Abstände zwischen den End- und Nachbarsätzen mindestens halb so groß sind wie zwischen den inneren Sätzen.

12. Wagen nach einem der Ansprüche 1 bis 11, **dadurch gekennzeichnet, dass** der Wagen an Oberseiten-Lasttragrollen (7, 14, 16) aufgehängt ist, die gegen das flexible Kabel (2) durch die Bodenpressrollen (15) gepresst werden, wobei die Bodenpressrollen angetriebene Rollen oder Leerlaufrollen sein können.

13. Wagen nach einem der Ansprüche 1 bis 12, **dadurch gekennzeichnet, dass** die Lasttragrollen (7, 14, 16) ein Zahnrad (16) ist, das dazu verwendet wird, die Kraft von dem Wagen auf das flexible Kabel (2) zu übertragen unter Verwendung von Schienen (17), die zwischen Zahnrädern (16) gespannt sind, wobei sich die Schienen (17) sich symmetrisch entlang der Längsachse des flexiblen Kabels (2) bewegen, entlang der Oberfläche des flexiblen Kabels (2).

14. Wagen nach einem der Ansprüche 1 bis 13, **dadurch gekennzeichnet, dass** das flexible Kabel (2) einen Zahnstreifen (18) aufweisen, der auf einer Oberfläche des flexiblen Kabels (2) angeordnet ist, und der Stromabnehmerwagen einen Antrieb enthält, der ein Zahnrad (16) aufweist, das mit dem Zahnstreifen (18) kämmt.

## Revendications

1. Chariot à pantographe destiné au captage d'électricité à partir d'un câble souple (2), ledit câble souple (2) contenant au moins deux fils conducteurs (3) partiellement moulés dans un écran souple formant des lèvres flexibles (2a) dans la partie non recouverte des fils conducteurs, dans lequel le chariot est muni d'un élément porteur (11), **caractérisé en ce que** l'élément porteur (11) est équipé d'au moins deux rouleaux porteurs (7, 14, 16), dont au moins un rouleau est configuré pour rouler sur la surface supérieure du câble flexible (2), et le chariot de pantographe comprend au moins deux entraîneurs coulissants (6) fixés à l'élément porteur (8, 11), qui sont configurés pour, dans leur position de fonctionnement, pénétrer dans les espaces entre les lèvres flexibles (2a) du câble (2) et de toucher les fils conducteurs (3) avec leurs surfaces de glissement, dans lequel au moins un élément d'ouverture (1, 4, 5) est prévu afin d'écarter les lèvres flexibles (2a) du câble (2) pour former un espace dans lequel pénètrent les entraîneurs coulissants (6).

2. Chariot selon la revendication 1, **caractérisé en ce que** l'élément d'ouverture (1, 4, 5) est une plaque (1) munie d'une lame, dont le bord est parallèle à l'axe longitudinal du câble (2), et qui, lorsque la lame est insérée entre les lèvres flexibles (2a) du câble (2), est pivotée autour d'un axe perpendiculaire au bord de la lame de la plaque (1), formant ainsi un espace dans lequel les éléments de guidage coulissants (6) peuvent pénétrer.

3. Chariot selon la revendication 1, **caractérisé en ce que** l'élément d'ouverture (1, 4, 5) est un coin (4) qui, une fois inséré entre les lèvres flexibles (2a) du câble (2), forme un espace dans lequel les éléments d'entraînement coulissants (6) peuvent être insérés.

4. Chariot selon la revendication 1, **caractérisé en ce que** l'élément d'ouverture (1, 4, 5) est un disque rotatif (5) qui tourne autour d'un axe perpendiculaire au plan passant par les axes longitudinaux des fils conducteurs (3), de telle sorte que les ailettes du disque rotatif (5) s'insèrent entre les lèvres flexibles (2a) du câble (2), formant un espace pour les éléments d'entraînement coulissants (6) présents sur le disque rotatif (5), du côté de l'ailette opposé à l'axe de rotation du disque rotatif (5), et que les éléments d'entraînement coulissants (6) entrent en contact avec les fils conducteurs (3).

5. Chariot selon l'une quelconque des revendications 1 à 4, **caractérisé en ce qu'**il comporte au moins deux éléments d'ouverture (1, 4, 5) pour le fil conducteur (3), espacés d'une certaine distance le long du câble flexible (2).

6. Chariot selon l'une quelconque des revendications 1 à 5**, caractérisé en ce que** des bras en ciseaux (8) munis de rouleaux porteurs (7, 14, 16) sont fixés à l'élément porteur (11).

7. Chariot selon l'une quelconque des revendications 1 à 5, **caractérisé en ce que** l'élément porteur (11) comprend une barre droite (9) dont l'axe longitudinal est perpendiculaire à l'axe longitudinal du câble flexible (2) de l' e et parallèle à un plan passant par les axes longitudinaux des fils conducteurs (3), dans lequel deux supports (10) mobiles symétriquement des rouleaux porteurs (7, 14, 16) se déplacent le long de son axe longitudinal, les rouleaux porteurs (7, 14, 16) étant placés aux extrémités des supports, de telle sorte que les surfaces des rouleaux (7, 14, 16) touchent la surface supérieure du câble flexible (2) une fois que les supports sont complètement rentrés, et que, lorsqu'ils sont sortis, l'ensemble du chariot puisse être déplacé vers le bas.

8. Chariot selon l'une quelconque des revendications 1 à 5, **caractérisé en ce que** l'élément porteur (11) comprend un châssis rigide présentant une section transversale en forme de U par rapport à l'axe longitudinal du câble flexible (2), dans lequel des barres comprenant les axes de rouleaux porteurs (7, 14, 16) sont fixées en tant qu'éléments rotatifs aux extrémités des bras du châssis rigide, tournant autour d'axes parallèles à l'axe longitudinal du câble flexible (2), dans lequel, lorsque ces barres munies de rouleaux porteurs (7, 14, 16) sont en position verticale, il est possible de déplacer l'ensemble du chariot vers le bas, et après la rotation des barres avec les rouleaux porteurs (7, 14, 16) vers le câble flexible (2), les surfaces des galets porteurs (7, 14, 16) viennent en contact avec la surface supérieure du câble flexible (2).

9. Chariot selon l'une quelconque des revendications 1 à 5, **caractérisé en ce que** l'élément porteur (11) comprend un châssis divisé et séparable comportant une partie fixe (12) et une barre mobile (13), dans lequel des axes munis de rouleaux porteurs (7, 14, 16) sont prévus aux extrémités libres des bras des deux parties (12, 13), de telle sorte qu'une fois que la barre (13) est éloignée du châssis (12), l'ensemble du chariot puisse être abaissé et que, lorsqu'elles sont rapprochées, les surfaces des rouleaux porteurs (7, 14, 16) soient en contact avec la surface supérieure du câble flexible (2).

10. Chariot selon l'une quelconque des revendications 1 à 9, **caractérisé en ce que** les rouleaux porteurs (7, 14, 16) peuvent être des rouleaux menés (7) ou des rouleaux fous (14).

11. Chariot selon l'une quelconque des revendications 1 à 10, **caractérisé en ce que** le chariot est suspendu à quatre ensembles symétriques de rouleaux porteurs entraînés (7) et de rouleaux porteurs libres (14), avec deux rouleaux situés en vis-à-vis, de part et d'autre du câble flexible (2), les distances entre les ensembles d'extrémité et les ensembles adjacents étant au moins deux fois plus petites que celles entre les ensembles intérieurs.

12. Chariot selon l'une quelconque des revendications 1 à 11, **caractérisé en ce que** le chariot est suspendu aux rouleaux porteurs supérieurs (7, 14, 16) pressés contre le câble flexible (2) par les rouleaux de pression inférieurs (15), les rouleaux de pression inférieurs (15) pouvant être des rouleaux entraînés ou des rouleaux libres.

13. Chariot selon l'une quelconque des revendications 1 à 12, **caractérisé en ce que** le rouleau porteur (7, 14, 16) est une roue dentée (16) utilisée pour transmettre la puissance du chariot au câble flexible (2) à l'aide de rails (17) tendus entre les roues dentées (16), les rails (17) se déplaçant symétriquement le long de l'axe longitudinal du câble flexible (2), le long de la surface du câble flexible (2).

14. Chariot selon l'une quelconque des revendications 1 à 13, **caractérisé en ce que** le câble flexible (2) comprend une bande dentée (18) placée sur une surface du câble flexible (2) et **en ce que** le chariot pantographe comprend un entraînement comportant une roue dentée (16) engrenant avec ladite bande dentée (18).
